# EUROPEAN PATENT SPECIFICATION

(11) **EP 4 300 775 B1**
(45) Date of publication and mention of the grant of the patent: **26.08.2026**
(21) Application number: 21933673.2
(22) Date of filing: 30.03.2021
(51) Int. Cl.: H02K 1/27, H02K 21/24, H02K 1/2798, H02K 1/02

(54) **ELECTRIC MOTOR ROTOR, ELECTRIC MOTOR AND ELECTRIC VEHICLE**
ROTOR FÜR EINEN ELEKTROMOTOR, ELEKTROMOTOR UND ELEKTROFAHRZEUG
ROTOR DE MOTEUR ÉLECTRIQUE, MOTEUR ÉLECTRIQUE ET VÉHICULE ÉLECTRIQUE

(43) Date of publication of application: 03.01.2024
(73) Proprietor: Huawei Digital Power Technologies Co., Ltd., Shenzhen, Guangdong 518043 (CN); Nanjing University of Science and Technology, Nanjing, Jiangsu 210094 (CN)
(72) Inventor: GENG, Weiwei, Nanjing, Jiangsu 210094 (CN); WU, Chaoqiang, Shenzhen, Guangdong 518129 (CN); CHEN, Jinhua, Shenzhen, Guangdong 518129 (CN); ZHOU, Zhao, Shenzhen, Guangdong 518129 (CN)
(74) Representative: Gill Jennings & Every LLP
(86) International application number: PCT/CN2021/084116
(87) International publication number: WO 2022/204992

(56) References cited:
- EP-A1- 3 208 919
- WO-A1-2021/026575
- CN-A- 102 624 115
- CN-A- 103 915 921
- CN-A- 105 305 748
- CN-A- 111 355 323
- CN-A- 111 355 323
- CN-B- 102 624 115
- FR-A1- 2 606 951
- FR-B1- 2 606 951
- JP-A- 2010 017 010
- JP-A- 2012 249 347
- JP-A- 2012 249 347
- US-A1- 2013 088 112

## Description

### TECHNICAL FIELD

The invention relates to the field of motor technologies, and in particular, to a motor rotor, a motor, and an electric vehicle.

### BACKGROUND

An axial flux motor, also referred to as a disk permanent magnet motor, features a large air gap plane, a compact structure, a high torque density, a high power density, a small size, a low weight, and the like, and therefore is widely used in mechanical engineering such as electric vehicles and aircraft propulsion systems.

The axial flux motor includes a stator and a motor rotor. Generally, the stator is a coil, and the motor rotor is a permanent magnet or a disk with a permanent magnet. At present, the rotor of the axial flux motor has a low reluctance torque, and therefore a torque output capability of the motor is poor, which leads to inadequate power of the axial flux motor, a large quantity of required permanent magnets, and high costs.

Therefore, how to increase a reluctance torque of the motor rotor to improve a torque output capability of a motor should be a research and development direction in the industry. Other previously proposed arrangements are disclosed in CN 111355323 A, CN 105305748 A, WO 2021/026575 A1, CN 102624115 B, FR 2606951 A1, EP 3208919 A1, JP 2010/017010 A, US 2013/088112 A1 and JP 2012/249347 A. CN 111355323 A discloses a disc type motor rotor with pole shoe composite magnetic pole structure, CN 105305748 A discloses a permanent magnet rotor, WO 2021/026575 A1 discloses a rotor, CN 102624115 B discloses an end play type motor and rotor thereof, FR 2606951 A1 discloses a motor with magnets, EP 3208919 A1 discloses a rotor for an axial gap type dynamo-electric machine, JP 2010/017010 A discloses an axial gap motor, US 2013/088112 A1 discloses a motor and a rotor of a motor, and JP 2012/249347 A discloses a rotor of an axial gap rotary electric machine.

### SUMMARY

The invention provides a motor rotor, a motor, and an electric vehicle. According to the invention, a reluctance torque of the motor rotor may be increased to improve a torque output capability of the motor.

According to a first aspect, the invention provides a motor rotor, including an iron core yoke, a spoke plate, and at least two permanent magnets. The iron core yoke is in a disk shape. The iron core yoke includes an axial direction and a circumferential direction. The at least two permanent magnets are fastened to the iron core yoke and sequentially spaced apart in the circumferential direction. The spoke plate is located between adjacent permanent magnets. Reluctance of the spoke plate is less than that of air, or reluctance of the spoke plate is less than that of the permanent magnet with the least reluctance among the at least two permanent magnets. The motor rotor further comprises a first permanent magnet, the first permanent magnet comprises a first magnetic portion, a second magnetic portion, and a third magnetic portion that are sequentially connected, the spoke plate comprises a first end and a second end that are disposed opposite to each other, and a first side portion and a second side portion that are located between the first end and the second end, the first end is connected to the iron core yoke, the second magnetic portion is located at the second end, the first magnetic portion is located at the first side portion, and the third magnetic portion is located at the second side portion. It may be understood that the spoke plate may form an integrated structure with the iron core yoke, so that a mounting process is reduced, and the structure is simple. In addition, the integrated structure makes the motor rotor high in structural strength and stability. Alternatively, the spoke plate may form a split structure with the iron core yoke, and the spoke plate is fastened to the iron core yoke through bonding or the like. The spoke plate may be made of a same material as the iron core yoke or another different material with low reluctance. This is not limited in the invention. For example, both the iron core yoke and the spoke plate may be made of a soft magnetic material. The permanent magnet material includes an aluminum-nickel-cobalt permanent magnet alloy, an iron-chromium-cobalt permanent magnet alloy, a permanent magnet ferrite, a rare earth permanent magnet material, a composite permanent magnet material, and the like. Reluctance of different permanent magnet materials is different. It may be understood that the first permanent magnet is of a U-shaped structure. The first permanent magnet of the U-shaped structure is fastened to the spoke plate upside down. In this way, permanent magnet structures (the first magnetic portion and the third magnetic portion) on two sides of the spoke plate are connected as a whole, and simplicity in mounting and positioning accuracy are ensured.

According to the invention, a quadrature-axis magnetic circuit is reserved between adjacent permanent magnets, and the spoke plate whose reluctance is less than that of air or the permanent magnet material is disposed on the quadrature-axis magnetic circuit, that is, the spoke plate is disposed between the adjacent permanent magnets. In this way, reluctance of the quadrature-axis magnetic circuit may be reduced, and quadrature-axis inductance may be increased. Therefore, a reluctance torque is increased, and a torque output capability of a motor is improved. Specifically, the motor is mainly configured to output a torque. If the torque is excessively low, power is inadequate, and the motor cannot drive a to-be-driven object. The reluctance torque is a type of torque. Increasing utilization of the reluctance torque may improve the overall torque output capability of the motor. The reluctance torque is related to the quadrature-axis inductance and direct-axis inductance. A larger difference between the quadrature-axis inductance and the direct-axis inductance indicates more significant saliency effect of the motor and the greater reluctance torque. If there is no spoke plate, there may be air or a permanent magnet magnetized in another direction between two adjacent permanent magnets (the permanent magnet magnetized in the another direction is the permanent magnet material). The reluctance of air and the permanent magnet material is high, and therefore the quadrature-axis inductance is low, the difference between the quadrature-axis inductance and the direct-axis inductance is small, and the reluctance torque is low, which is not conducive to improving the torque output capability of the motor. According to the invention, the spoke plate with low reluctance is disposed between adjacent permanent magnets (that is, on the quadrature-axis magnetic circuit), so that the quadrature-axis inductance may be increased, that is, the difference between the quadrature-axis inductance and the direct-axis inductance is increased. Therefore, the reluctance torque may be effectively increased, and the torque output capability of the motor may be improved. The torque of the motor includes the reluctance torque and a permanent magnet torque. It may be understood that when a required torque of the motor is constant, increasing the reluctance torque may correspondingly reduce the permanent magnet torque. In this way, a quantity of permanent magnets may be reduced, which is conducive to reduction of manufacturing costs of the motor. The motor rotor in the invention has a simple structure and a more flexible design, and can better meet diversified performance requirements on the motor in different application scenarios.

In a possible implementation, a size of the spoke plate in the axial direction is greater than a size of the spoke plate in the circumferential direction. A direct-axis magnetic circuit partially passes through the spoke plate in the circumferential direction. Therefore, the spoke plate can also increase the direct-axis inductance. The size of the spoke plate in the axial direction is limited to be greater than the size of the spoke plate in the circumferential direction, so that an increase of the quadrature-axis inductance may be greater than that of the direct-axis inductance. In this way, the difference between the quadrature-axis inductance and the direct-axis inductance can be increased, to increase the reluctance torque and improve the torque output capability of the motor.

In a possible implementation, there are at least two spoke plates between two adjacent permanent magnets, and the at least two spoke plates are spaced apart in the circumferential direction. There is air or the permanent magnet material between adjacent spoke plates. As a quantity of spoke plates increases, an amount of air or a quantity of permanent magnet materials also increases. An increase of the quantity of permanent magnet materials may enhance flux concentration effects and increase the torque of the motor. In addition, an increase of the amount of air or the quantity of permanent magnet materials can reduce the direct-axis inductance and increase the difference between the quadrature-axis inductance and the direct-axis inductance, to increase the reluctance torque and improve the torque output capability of the motor.

In a possible implementation, the first permanent magnet is located between the permanent magnet and the spoke plate. The reluctance of the spoke plate is less than that of the first permanent magnet. In this implementation, the permanent magnet is magnetized in the axial direction, and two adjacent permanent magnets are magnetized in opposite directions. The first permanent magnet is magnetized in the circumferential direction, and at least two first permanent magnets between two adjacent permanent magnets are magnetized in a same direction. A combination of the permanent magnet and the first permanent magnet that are magnetized in different directions may effectively improve flux concentration effects of the motor rotor, improve an air gap density, and reduce eddy current losses of the permanent magnet and the first permanent magnet. If there is no spoke plate, there may be the first permanent magnet between two adjacent permanent magnets. Reluctance of the first permanent magnet is high, and therefore the quadrature-axis inductance is low, the difference between the quadrature-axis inductance and the direct-axis inductance is small, and the reluctance torque is low, which is not conducive to improving the torque output capability of the motor. In this implementation, the spoke plate whose reluctance is less than that of the first permanent magnet is disposed between two adjacent permanent magnets, and the first permanent magnet is located between the permanent magnet and the spoke plate. In this way, the quadrature -axis inductance may be effectively increased, and the utilization of the reluctance torque of the motor may be increased.

In a possible implementation, the spoke plate includes a limiting surface. The limiting surface is in contact with the first permanent magnet, so that the spoke plate and the first permanent magnet are fastened in the axial direction. The first permanent magnet is located between the permanent magnet and the spoke plate. If there is no limiting surface, the first permanent magnet moves in the axial direction, which is unfavorable for structural stability of the motor rotor.

In a possible implementation, the spoke plate includes a main portion and a limiting portion. The main portion is connected to the iron core yoke. The limiting portion is on a side that is of the main portion and that is away from the iron core yoke. The limiting surface is located at the limiting portion. In other words, a size of the limiting portion is greater than that of the main portion. The main portion and the limiting portion form a step structure. The limiting surface is a step surface of the step structure. The first permanent magnet is located between the permanent magnet and the spoke plate. In this implementation, the limiting surface is disposed on the spoke plate, to limit the first permanent magnet in the axial direction, so that the first permanent magnet is more stable and cannot move in the axial direction. Therefore, overall stability of the motor is improved.

In a possible implementation, a size of the spoke plate gradually increases from the first end to the second end. The limiting surface is a connection surface between the first end and the second end. In other words, the spoke plate of the iron core may be of an inverted trapezoidal structure. The spoke plate may be in contact with the permanent magnet. Alternatively, the spoke plate may be spaced apart from the permanent magnet. When the spoke plate is spaced apart from the permanent magnet, there may be air or another structural part (for example, the first permanent magnet) between the spoke plate and the permanent magnet. The size of the spoke plate is limited to gradually increase from the first end to the second end, so that a size of an end that is of a space formed between the permanent magnet and the spoke plate of the iron core and that is close to the iron core yoke is large, while a size of an end that is away from the iron core yoke is small. In this way, when the first permanent magnet is disposed between the permanent magnet and the spoke plate, the connection surface (that is, the limiting surface) between the first end and the second end may limit, in the axial direction, the first permanent magnet disposed between the permanent magnet and the spoke plate, so that the first permanent magnet disposed between the permanent magnet and the spoke plate is more stable and cannot move in the axial direction. Therefore, the overall stability of the motor is improved. It may be understood that when the spoke plate of the iron core is of the inverted trapezoidal structure with a wide upper portion and a narrow lower portion, a space between the spoke plate of the iron core and the iron core pole piece may be of a trapezoidal structure with a narrow upper portion and a wide lower portion, that is, the first permanent magnet embedded between the spoke plate of the iron core and the iron core pole piece may be of a trapezoidal structure.

In a possible implementation, the spoke plate includes a connection portion located between the first end and the second end. A size from the first end to the connection portion gradually decreases. A size from the second end to the connection portion gradually decreases. The limiting surface is a connection surface between the second end and the connection portion. In other words, the spoke plate may be of a dumbbell-shaped structure with two large ends and a small middle portion. When the spoke plate is spaced apart from the permanent magnet, there may be air or another structural part (for example, the first permanent magnet) between the spoke plate and the permanent magnet. The spoke plate is limited as the dumbbell-shaped structure with the two large ends and the small middle portion, so that a size of an end that is of a space formed between the permanent magnet and the spoke plate of the iron core and that is away from the iron core yoke is small. In this way, when the first permanent magnet is disposed between the permanent magnet and the spoke plate, the connection surface (that is, the limiting surface) between the second end and the connection portion may limit the first permanent magnet in the axial direction, so that the first permanent magnet disposed between the permanent magnet and the spoke plate is more stable and cannot move in the axial direction. Therefore, the overall stability of the motor is improved. It may be understood that when the spoke plate of the iron core is of the dumbbell-shaped structure with the two large ends and the small middle portion, a space between the spoke plate of the iron core and the iron core pole piece may be of a structure with two small ends and a large middle portion, that is, the first permanent magnet embedded between the spoke plate of the iron core and the iron core pole piece may be of a structure with two small ends and a large middle portion.

In a possible implementation, the motor rotor further includes an iron core pole piece. The iron core pole piece is located on a side that is of the permanent magnet and that is away from the iron core yoke. The iron core pole piece and the spoke plate are on left and right sides of the first permanent magnet respectively. The iron core pole piece and the spoke plate limit the first permanent magnet in the circumferential direction, so that the first permanent magnet cannot move in the circumferential direction. Therefore, the overall stability of the motor is improved.

In a possible implementation, the motor rotor further includes an iron core pole piece and a flux barrier. The iron core pole piece and the iron core yoke are disposed at an interval. The flux barrier is connected to the iron core pole piece and the iron core yoke. The iron core pole piece, the flux barrier, and the iron core yoke enclose an accommodating cavity. The permanent magnet is located in the accommodating cavity. Specifically, a quantity of iron core pole pieces is the same as the quantity of permanent magnets. The iron core pole pieces are sequentially spaced apart in the circumferential direction of the iron core yoke. The iron core pole piece and the iron core yoke are disposed at an interval in the axial direction. Two flux barriers are located on lower sides of two opposite ends of the iron core pole piece. The flux barriers are connected to the iron core pole piece and the iron core yoke, so that the iron core pole piece, the flux barriers, and the iron core yoke enclose an accommodating cavity. In this implementation, the accommodating cavity is provided, so that mounting precision of the permanent magnet may be improved, mounting positioning of the permanent magnet may be implemented, and an assembly process is simplified. During mounting, the permanent magnet only needs to be mounted in the accommodating cavity with a matching size, so that the mounting precision and mounting efficiency are improved, and simplicity in assembly and fastening is ensured. It may be understood that the iron core pole piece, the flux barrier, and the iron core yoke may form a split structure, and the iron core pole piece and the flux barrier are fastened to the iron core yoke through bonding or the like. Alternatively, the iron core pole piece and the flux barrier may form an integrated structure with the iron core yoke, so that a mounting process is reduced, and the structure is simple. In addition, the integrated structure makes the motor rotor high in structural strength and stability. The iron core pole piece may generate quadrature-axis inductance, to increase the difference between the quadrature-axis inductance and the direct-axis inductance, so that the reluctance torque may be effectively increased, and the torque output capability of the motor may be improved. The iron core pole piece is on a surface of the permanent magnet. The iron core pole piece has a low eddy current coefficient, and is close to an air gap, so that the eddy current loss of the permanent magnet may be reduced. The iron core pole piece is a part of a magnetic circuit. If no iron core pole piece is disposed, there may be air where the iron core pole piece is currently located. The reluctance of air is high, and therefore the torque of the motor is significantly reduced, which is not conducive to improving the torque output capability of the motor.

In this implementation, the permanent magnet is disposed between the iron core yoke and the iron core pole piece to form a motor rotor of a built-in structure. The motor rotor of the built-in structure achieves significant saliency effect of the motor, and has an advantage of generating a high reluctance torque. Specifically, disposing the permanent magnet inside may add the quadrature-axis magnetic circuit, improve the saliency effect of the motor, endow the motor with high flux weakening performance and a wide constant power range, reduce the eddy current loss of the permanent magnet, and protect the permanent magnet to make the permanent magnet unlikely to be demagnetized. The permanent magnet in the motor rotor is mounted in the accommodating cavity, so that a structure of the motor rotor is solid, and structural instability of the motor rotor may be avoided even when the permanent magnet is subjected to centrifugal force and magnetic pull force. In addition, disposing the permanent magnet inside may fully utilize the reluctance torque generated by asymmetry of a magnetic circuit of the motor rotor, to improve the torque output capability of the motor without increasing the quantity of permanent magnets.

In a possible implementation, a size of the spoke plate in the axial direction is greater than a distance between a surface that is of the iron core pole piece and that is away from the permanent magnet and the iron core yoke. In this implementation, the size of the spoke plate in the axial direction is limited to be greater than the distance between the surface that is of the iron core pole piece and that is away from the permanent magnet and the iron core yoke, so that the size of the spoke plate in the axial direction is enlarged. Therefore, the reluctance of the quadrature-axis magnetic circuit may be reduced, the quadrature-axis inductance may be increased, and utilization of the reluctance torque may be increased.

According to a second aspect, the invention provides a motor, including a stator, a rotating shaft, and the motor rotor according to the first aspect. The motor rotor is mounted to the rotating shaft. The stator is mounted to the rotating shaft. Specifically, the stator and two motor rotors are coaxially connected by using the rotating shaft. There may be one motor rotor, and the one motor rotor and the stator form a single-stator single-rotor motor. In another implementation, there may be two motor rotors, and the stator is located between the two motor rotors to form a single-stator double-rotor motor. The two rotors in the single-stator double-rotor motor are symmetrically arranged. Permanent magnets are magnetized in opposite directions. The stator may have an iron core yoke, may have no yoke, or may have no iron core. The motor in the invention may be an axial flux motor. The axial flux motor features a large air gap plane, a compact structure, a high torque density, a high power density, a small size, a low weight, and the like, and therefore is widely used in mechanical engineering such as electric vehicles and aircraft propulsion systems.

According to a third aspect, the invention provides an electric vehicle, including a transmission shaft, wheels, and the motor according to the second aspect. The transmission shaft is connected to the motor and the wheels. The motor outputs a torque. Mechanical energy of the motor is transmitted to the wheels through the transmission shaft, to drive the wheels to rotate. The motor converts electric energy of a battery into the mechanical energy, and drives the wheels and a working apparatus through a transmission apparatus, or directly drives the wheels and a working apparatus. The motor is configured to output the mechanical energy. The mechanical energy of the motor is transmitted to the wheels through the transmission shaft, to drive the wheels to rotate.

According to the invention, the quadrature-axis magnetic circuit is reserved between adjacent permanent magnets, and the spoke plate whose reluctance is less than that of air or the permanent magnet material is disposed on the quadrature-axis magnetic circuit, that is, the spoke plate is disposed between the adjacent permanent magnets. In this way, the reluctance of the quadrature-axis magnetic circuit may be reduced, and the quadrature-axis inductance may be increased. Therefore, the reluctance torque is increased, and the torque output capability of the motor is improved. The torque of the motor includes the reluctance torque and the permanent magnet torque. It may be understood that when the required torque of the motor is constant, increasing the reluctance torque may correspondingly reduce the permanent magnet torque. In this way, the quantity of permanent magnets may be reduced, which is conducive to reduction of the manufacturing costs. According to the invention, the permanent magnet may be disposed between the iron core yoke and the iron core pole piece to form the motor rotor of the built-in structure. The motor rotor of the built-in structure achieves significant saliency effect of the motor, and has an advantage of generating a high reluctance torque. In addition, disposing the permanent magnet inside may fully utilize the reluctance torque generated by asymmetry of the magnetic circuit of the motor rotor, to improve the torque output capability of the motor without increasing the quantity of permanent magnets.

### BRIEF DESCRIPTION OF DRAWINGS

The following describes the accompanying drawings.
FIG. 1 is a schematic diagram of a structure of an electric vehicle which is not an embodiment of the invention;
FIG. 2 is a schematic diagram of a structure of a motor which is not an embodiment of the invention;
FIG. 3 is an exploded view of a motor rotor which is not an embodiment of the invention;
FIG. 4 is a schematic diagram of a structure of an iron core of a motor rotor which is not an embodiment of the invention;
FIG. 5 is a schematic diagram of a planar structure of a motor rotor which is not an embodiment of the invention;
FIG. 6 is a schematic diagram of a direct-axis magnetic circuit of a motor which is not an embodiment of the invention;
FIG. 7 is a schematic diagram of a quadrature-axis magnetic circuit of a motor which is not an embodiment of the invention;
FIG. 8 is a schematic diagram of a structure of a motor rotor which is not an embodiment of the invention;
FIG. 9 is a schematic diagram of a structure of another motor rotor which is not an embodiment of the invention;
FIG. 10 is a schematic diagram of a structure of another motor rotor which is not an embodiment of the invention;
FIG. 11 is a schematic diagram of a structure of an iron core of another motor rotor which is not an embodiment of the invention;
FIG. 12 is a schematic diagram of a structure of an iron core of another motor rotor which is not an embodiment of the invention;
FIG. 13 is a schematic diagram of a structure of a motor rotor according to an embodiment of the invention;
FIG. 14 is a schematic diagram of a structure of another motor rotor which is not an embodiment of the invention;
FIG. 15 is a schematic diagram of a structure of another motor rotor which is not an embodiment of the invention;
FIG. 16 is a schematic diagram of a structure of an iron core of another motor rotor which is not an embodiment of the invention; and
FIG. 17 is a schematic diagram of a planar structure of a motor rotor which is not an embodiment of the invention.

### DESCRIPTION OF EMBODIMENTS

The following clearly describes the technical solutions in embodiments of the invention with reference to the accompanying drawings in embodiments of the invention. It is clear that the described embodiments are merely some but not all of embodiments of the invention. All other embodiments obtained by a person of ordinary skill in the art based on embodiments of the invention without creative efforts shall fall within the protection scope of the invention.

Orientation terms mentioned in embodiments of the invention, for example, "up", "down", "left", "right", "inside", and "outside", are merely directions with reference to the accompanying drawings. Therefore, the orientation terms are used to better and more clearly describe and understand embodiments of the invention, instead of indicating or implying that an apparatus or element needs to have a specific orientation and be constructed and operated in a specific orientation, and cannot be understood as limitations on embodiments of the invention.

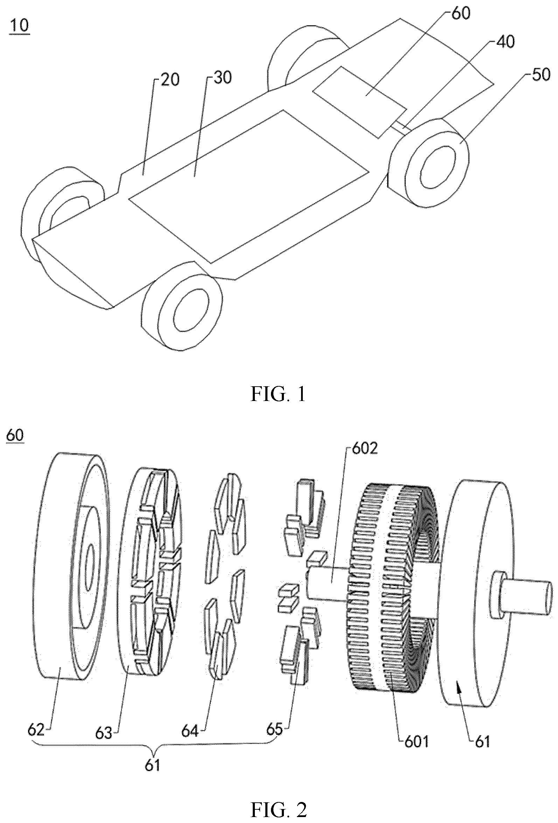

The invention provides a motor rotor, a motor, and an electric vehicle. FIG. 1 is a schematic diagram of a structure of an electric vehicle 10. The electric vehicle 10 includes a chassis 20, a battery 30, a transmission shaft 40, wheels 50, and a motor 60. The electric vehicle 10 is a vehicle that is driven by a vehicle-mounted power supply (the vehicle-mounted power supply may be the battery 30) and that drives the wheels by using the motor 60, has advantages such as no pollution, reproducibility, low noise, high energy efficiency, diversity, simple structure, and convenience in maintenance, and is a development direction of vehicles in the future. Specifically, the battery 30 provides electric energy for the motor 60 of the electric vehicle 10. The motor 60 converts the electric energy of the battery 30 into mechanical energy, and drives the wheels 50 and a working apparatus through a transmission apparatus, or directly drives the wheels 50 and a working apparatus. The electric vehicle 10 is driven by electricity. Therefore, the motor 60 and the battery 30 become key factors that affect power performance, endurance, safety, and reliability of the electric vehicle 10. The battery 30 and the motor 60 are located on the chassis 20. The battery 30 provides the electric energy for the motor 60. The motor 60 converts the electric energy of the battery 30 into the mechanical energy. The transmission shaft 40 is connected to the motor 60 and the wheels 50. The motor 60 outputs the mechanical energy. The mechanical energy of the motor 60 is transmitted to the wheels 50 through the transmission shaft 40, to drive the wheels 50 to rotate.

The motor 60 in the invention may be an axial flux motor. The axial flux motor features a large air gap plane, a compact structure, a high torque density, a high power density, a small size, a low weight, and the like, and therefore is widely used in mechanical engineering such as electric vehicles and aircraft propulsion systems. Alternatively, the motor 60 may be another type of motor. This is not limited in the invention.

FIG. 2 is a schematic diagram of a structure of the motor 60. The motor 60 includes a stator 601, a rotating shaft 602, and motor rotors 61. The stator 601 is coaxially connected to the motor rotor 61. There may be two motor rotors 61, and the stator 601 is located between the two motor rotors 61 to form a single-stator double-rotor motor 60. The motor rotor 61 is mounted to the rotating shaft 602. The stator 601 is mounted to the rotating shaft 602. That is, the stator 601 is coaxially connected to the two motor rotors 61 by using the rotating shaft 602. Air gaps are formed between the stator 601 and the two motor rotors 61. The two rotors in the single-stator double-rotor motor 60 are arranged in mirror symmetry. Permanent magnets are magnetized in opposite directions. The stator 601 may have an iron core yoke, may have no yoke, or may have no iron core.

In another implementation, there may be one motor rotor 61, and the one motor rotor 61 and the stator 601 form a single-stator single-rotor motor 60.

It should be noted that there are two motor rotors 61 in FIG. 2. The motor rotor 61 on a right side of the stator 601 and the motor rotor 61 on a left side are of a same structure and in mirror symmetry. The motor rotor 61 on the right side of the stator 601 may be considered as a structure after assembly of the motor rotor 61 on the left side is completed. In other words, the motor rotor 61 on the right side has been assembled, and the motor rotor 61 on the left side has not been assembled, only to reflect a structure before assembly.

In this case, an embodiment of the invention provides a motor rotor 61. The motor rotor 61 in the invention has a large reluctance torque, so that a torque output capability of the motor 60 may be effectively improved. In addition, the motor rotor 61 in this embodiment of the invention is simple in structure, low in mounting difficulty, and high in mounting precision.

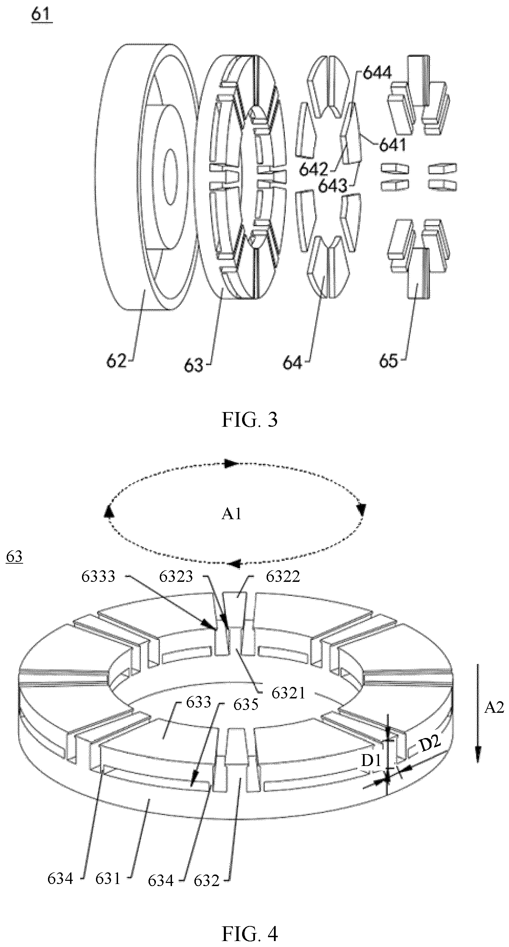

FIG. 3 is an exploded view of the motor rotor 61. The motor rotor 61 includes a housing 62, an iron core 63, at least two permanent magnets 64, and first permanent magnets 65. The at least two permanent magnets 64 and the first permanent magnets 65 are mounted to the iron core 63. The iron core 63 is mounted in the housing 62, and is fastened in the housing 62 through adhesion, injection molding, or the like. The housing 62 may protect the iron core 63, the permanent magnet 64, and the first permanent magnet 65, to prevent impact on performance of the motor rotor 61 due to damage to the iron core 63, the permanent magnet 64, and the first permanent magnet 65 during transportation, mounting, and operation. It may be understood that the housing 62 can enhance structural strength of the motor rotor 61, and reduce impact of centrifugal force on the structure of the motor rotor 61 when the motor rotor 61 rotates at a high speed.

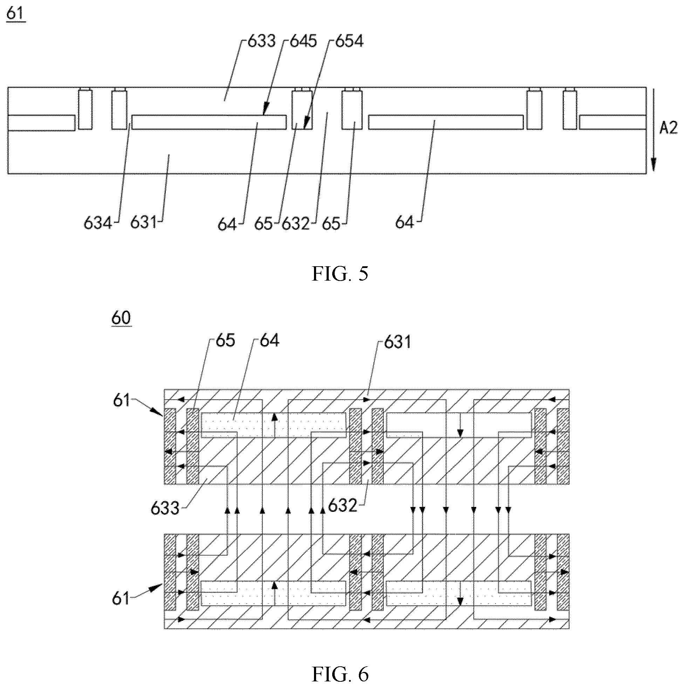

As shown in FIG. 4 and FIG. 5, FIG. 4 is a schematic diagram of a structure of the iron core 63 of the motor rotor 61, and FIG. 5 is a schematic diagram of a planar structure of the motor rotor 61. The iron core 63 includes an iron core yoke 631, spoke plates 632, and iron core pole pieces 633. The iron core yoke 631 is in a disk shape, and has a center hole in the disk shape. The iron core yoke 631 includes a circumferential direction A1 and an axial direction A2. The at least two permanent magnets 64 are fastened to the iron core yoke 631 and sequentially spaced apart in the circumferential direction A1. The spoke plate 632 is located between adjacent permanent magnets 64. In other words, the permanent magnet 64 is also located between two adjacent spoke plates 632. A quadrature-axis magnetic circuit is reserved between two adjacent permanent magnets 64, that is, the spoke plate 632 is located on the quadrature-axis magnetic circuit.

The spoke plate 632 may form a split structure with the iron core yoke 631, and the spoke plate 632 is fastened to the iron core yoke 631 through bonding or the like. Alternatively, the spoke plate 632 may form an integrated structure with the iron core yoke 631, so that a mounting process is reduced, and the structure is simple. In addition, the integrated structure endows the iron core 63 with advantages of high structural strength and stability. The spoke plate 632 may be made of a same material as the iron core yoke 631 or another different material with low reluctance. For example, both the iron core yoke 631 and the spoke plate 632 may be made of a soft magnetic material. Specifically, reluctance of the spoke plate 632 is less than that of air, or reluctance of the spoke plate 632 is less than that of a permanent magnet material. If no spoke plate 632 is disposed, there is usually the permanent magnet material or air between adjacent permanent magnets 64. In the invention, the spoke plate 632 whose reluctance is less than that of air or the permanent magnet material is disposed between adjacent permanent magnets 64. Both the permanent magnet 64 and the first permanent magnet 65 are permanent magnet materials. The permanent magnet material includes an aluminum-nickel-cobalt permanent magnet alloy, an iron-chromium-cobalt permanent magnet alloy, a permanent magnet ferrite, a rare earth permanent magnet material, a composite permanent magnet material, and the like. Reluctance of different permanent magnet materials is different. In the invention, that the reluctance of the spoke plate 632 is less than that of the permanent magnet material means that the reluctance of the spoke plate 632 is less than that of a permanent magnet material with minimum reluctance.

According to the invention, a quadrature-axis magnetic circuit is reserved between adjacent permanent magnets 64, and the spoke plate 632 whose reluctance is less than that of air or the permanent magnet material is disposed on the quadrature-axis magnetic circuit, that is, the spoke plate 632 is disposed between the adjacent permanent magnets 64. In this way, reluctance of the quadrature-axis magnetic circuit may be reduced, and quadrature-axis inductance may be increased. Therefore, a reluctance torque is increased, and a torque output capability of the motor 60 is improved. Specifically, the motor 60 is mainly configured to output a torque. If the torque is excessively low, power is inadequate, and the motor cannot drive a to-be-driven object. The reluctance torque is a type of torque. Increasing utilization of the reluctance torque may improve the overall torque output capability of the motor 60. The reluctance torque is related to the quadrature-axis inductance and direct-axis inductance. A larger difference between the quadrature-axis inductance and the direct-axis inductance indicates more significant saliency effect of the motor 60 and the greater reluctance torque. If there is no spoke plate 632, there may be air or a permanent magnet magnetized in another direction between two adjacent permanent magnets 64 (the permanent magnet magnetized in the another direction is the permanent magnet material). The reluctance of air and the permanent magnet material is high, and therefore the quadrature-axis inductance is low, the difference between the quadrature-axis inductance and the direct-axis inductance is small, and the reluctance torque is low, which is not conducive to improving the torque output capability of the motor 60. According to the invention, the spoke plate 632 with low reluctance is disposed between adjacent permanent magnets 64 (that is, on the quadrature-axis magnetic circuit), so that the quadrature-axis inductance of the quadrature-axis magnetic circuit may be increased, that is, the difference between the quadrature-axis inductance and the direct-axis inductance is increased. Therefore, the reluctance torque may be effectively increased, and the torque output capability of the motor 60 may be improved. The torque of the motor includes the reluctance torque and a permanent magnet torque. It may be understood that when a required torque of the motor is constant, increasing the reluctance torque may correspondingly reduce the permanent magnet torque. In this way, a quantity of permanent magnets 64 may be reduced, which is conducive to reduction of manufacturing costs. The motor rotor 61 in the invention has a simple structure, a more flexible design, and many controllable parameters, and can better meet diversified performance requirements on the motor in different application scenarios.

It should be noted that in the invention, no iron core pole piece 633 is disposed, the permanent magnets 64 are disposed at intervals only on the iron core yoke 631, and the spoke plate 632 is disposed between adjacent permanent magnets 64. In this case, the spoke plate 632 can also reduce reluctance of the quadrature-axis magnetic circuit and increase the quadrature-axis inductance. In the invention, no first permanent magnet 65 is disposed, and the permanent magnet 64 and the spoke plate 632 are disposed at an interval, that is, there is air between the permanent magnet 64 and the spoke plate 632. In this case, the spoke plate 632 can also reduce reluctance of the quadrature-axis magnetic circuit and increase the quadrature-axis inductance. Alternatively, no first permanent magnet 65 is disposed, and the permanent magnet 64 is in contact with the spoke plate 632. In addition, in the invention, the iron core pole piece 633 and the first permanent magnet 65 may be disposed to enhance performance of the motor rotor 61. This embodiment is described by using an example in which the motor rotor 61 is provided with the iron core pole piece 633 and the first permanent magnet 65.

A quantity of iron core pole pieces 633 is the same as the quantity of permanent magnets 64. The iron core pole pieces 633 are sequentially spaced apart in the circumferential direction A1 of the iron core yoke 631. The iron core pole piece 633 and the iron core yoke 631 are disposed at an interval in the axial direction A2. Two flux barriers 634 are disposed between the iron core pole piece 633 and the iron core yoke 631. The two flux barriers 634 are located on lower sides of two opposite ends of the iron core pole piece 633. The flux barriers 634 are connected to the iron core pole piece 633 and the iron core yoke 631, so that the iron core pole piece 633, the flux barriers 634, and the iron core yoke 631 enclose an accommodating cavity 635. The permanent magnet 64 is mounted in the accommodating cavity 635. In this implementation, the accommodating cavity 635 is provided, so that mounting precision of the permanent magnet 64 may be improved, mounting positioning of the permanent magnet 64 may be implemented, and an assembly process is simplified. During mounting, the permanent magnet 64 only needs to be mounted in the accommodating cavity 635 with a matching size, so that the mounting precision and mounting efficiency are improved, and simplicity in assembly and fastening is ensured. In this implementation, reinforcing ribs may be disposed on a surface that is of the flux barrier 634 and that faces the spoke plate 632622 and a surface that is of the iron core pole piece and that faces the spoke plate 632, to enhance overall structural strength of the iron core 63.

It should be noted that in this implementation, no flux barrier 634 is disposed, and the iron core pole piece 633 is separated from the iron core yoke 631. The permanent magnet 64 is first fastened to the iron core yoke 631, and then the iron core pole piece 633 is fastened to the permanent magnet 64.

The iron core pole piece 633, the flux barrier 634, and the iron core yoke 631 may form a split structure, and the iron core pole piece 633 and the flux barrier 634 are fastened to the iron core yoke 631 through bonding or the like. Alternatively, the iron core pole piece 633 and the flux barrier 634 may form an integrated structure with the iron core yoke 631, so that a mounting process is reduced, and the structure is simple. In addition, the integrated structure makes the iron core 63 high in structural strength and stability.

The iron core pole piece 633 may generate quadrature-axis inductance, to increase the difference between the quadrature-axis inductance and the direct-axis inductance, so that the reluctance torque may be effectively increased, and the torque output capability of the motor 60 may be improved. The iron core pole piece 633 is on a surface of the permanent magnet 64. The iron core pole piece 633 has a low eddy current coefficient, and the iron core pole piece 633 is close to an air gap, so that an eddy current loss of the permanent magnet 64 may be reduced. The iron core pole piece 633 is a part of a magnetic circuit. If no iron core pole piece 633 is disposed, there may be air where the iron core pole piece 633 is currently located. The reluctance of air is high, and therefore the torque of the motor 60 is significantly reduced, which is not conducive to improving the torque output capability of the motor 60.

The permanent magnet 64 on the motor rotor 61 may be arranged in a surface-mounted or built-in manner. The motor rotor 61 of a surface-mounted structure is simple in structure, convenient to mount, small, and light. However, it is difficult to fasten the permanent magnet 64 of the surface-mounted structure. During operation of the motor rotor 61, when the permanent magnet 64 of the surface-mounted structure is subjected to centrifugal force and magnetic pull force, the structure of the motor rotor 61 is unstable. In addition, the motor rotor 61 of the surface-mounted structure has disadvantages such as an incapability of utilizing the reluctance torque, a large quantity of required permanent magnets 64, and a large surface eddy current of the permanent magnet 64. Therefore, in this implementation, the permanent magnet 64 may be disposed between the iron core yoke 631 and the iron core pole piece 633 to form a motor rotor 61 of a built-in structure. The motor rotor 61 of the built-in structure achieves significant saliency effect of the motor, and has an advantage of generating a high reluctance torque. Specifically, disposing the permanent magnet 64 inside may add the quadrature-axis magnetic circuit, improve the saliency effect of the motor 60, endow the motor 60 with high flux weakening performance and a wide constant power range, reduce the eddy current loss of the permanent magnet 64, and protect the permanent magnet 64 to make the permanent magnet 64 unlikely to be demagnetized. The permanent magnet 64 in the motor rotor 61 is mounted in the accommodating cavity 635, so that a structure of the motor rotor 61 is solid, and structural instability of the motor rotor 61 may be avoided even when the permanent magnet 64 is subjected to the centrifugal force and the magnetic pull force. In addition, disposing the permanent magnet 64 inside may fully utilize the reluctance torque generated by asymmetry of a magnetic circuit of the motor rotor 61, to improve the torque output capability of the motor 60 without increasing the quantity of permanent magnets 64.

It should be noted that FIG. 4 merely shows that the quantity of iron core pole pieces 633 and the quantity of permanent magnets 64 (that is, accommodating cavities 635) are eight. In another implementation, the quantity of iron core pole pieces 633 and the quantity of permanent magnets 64 (the permanent magnets 64 are located in accommodating cavities 635) may be two, three, four, five, six, seven, nine, ten, or the like, which may be specifically set based on a structure, a size, and required performance of the motor 60. This is not limited in the invention.

Refer to FIG. 5. The first permanent magnet 65 is located between the permanent magnet 64 and the spoke plate 632. The reluctance of the spoke plate 632 is less than that of the first permanent magnet 65. It may be understood that the first permanent magnet 65 is the permanent magnet material. When the iron core pole piece 633 is disposed, the first permanent magnet 65 is also located between the iron core pole piece 633 and the spoke plate 632. If there is no spoke plate 632, there may be a complete first permanent magnet 65 between two adjacent permanent magnets 64, or there is no first permanent magnet 65 but air between two adjacent permanent magnets 64. The reluctance of air and the first permanent magnet 65 is high, and therefore the quadrature-axis inductance is low, the difference between the quadrature-axis inductance and the direct-axis inductance is small, and the reluctance torque is low, which is not conducive to improving the torque output capability of the motor 60. In this implementation, the spoke plate 632 whose reluctance is less than that of the first permanent magnet 65 is disposed between two adjacent permanent magnets 64, and the first permanent magnet 65 is located between the permanent magnet 64 and the spoke plate 632. In this way, the quadrature -axis inductance may be effectively increased, and utilization of the reluctance torque of the motor 60 may be improved.

In a specific implementation, which is not an embodiment of the invention as defined in the appended set of claims, refer to FIG. 3. The permanent magnet 64 may be of a sector structure. An inner circular arc 641 and an outer circular arc 642 of the permanent magnet 64 of the sector structure form a concentric structure (that is, have a same circle center) with the iron core 63. A first straight line segment 643 and a second straight line segment 644 of the permanent magnet 64 of the sector structure may be parallel to a radial direction of the iron core 63. Alternatively, there is an included angle between a first straight line segment 643 and a radial direction of the iron core 63 and between a second straight line segment 644 and the radial direction of the iron core 63. This helps reduce torque ripples and improve vibration noise of the motor 60. The permanent magnet 64 is evenly embedded in the accommodating cavity 635 reserved in the iron core 63. The permanent magnet 64 is magnetized in the axial direction A2, and two adjacent permanent magnets 64 are magnetized in opposite directions. It should be noted that a structure of the permanent magnet 64 is not limited to a sector, and the permanent magnet 64 may also be in another shape, which may be specifically set according to a requirement.

In a specific implementation, which is not an embodiment of the invention as defined in the appended set of claims, refer to FIG. 3. The first permanent magnet 65 may be sector-shaped or rectangular. The first permanent magnet 65 is evenly embedded in a space reserved in the iron core 63, that is, the first permanent magnet 65 is embedded in a space between the iron core pole piece 633 and the spoke plate 632 of the iron core. The first permanent magnet 65 is magnetized in the circumferential direction A1. First permanent magnets 65 on two sides of the spoke plate 632 are magnetized in a same direction. Magnetic fields of the permanent magnet 64 and the first permanent magnet 65 both gather towards the iron core pole piece 633 adjacent to the permanent magnet 64 and the first permanent magnet 65.

The permanent magnet 64 may be fastened in the accommodating cavity 635 through adhesion or injection molding, and the first permanent magnet 65 may also be fastened between the iron core pole piece 633 and the spoke plate 632 through adhesion, injection molding, or injection molding, to enhance bonding strength between the permanent magnet 64 and the iron core 63 and between the first permanent magnet 65 and the iron core 63, improve structural strength of the motor rotor 61, and enhance structural stability of the motor 60.

In this implementation, a combination of the permanent magnet 64 and the first permanent magnet 65 that are magnetized in different directions is used. The permanent magnet 64 is magnetized in the axial direction A2, and two adjacent permanent magnets 64 are magnetized in opposite directions. The first permanent magnet 65 is magnetized in the circumferential direction A1, and at least two first permanent magnets 65 between two adjacent permanent magnets 64 are magnetized in a same direction. A combination of different magnetization directions may effectively improve flux concentration effects of the motor rotor 61, improve an air gap density, and reduce eddy current losses of the permanent magnet 64 and the first permanent magnet 65.

Refer to FIG. 5. The structure shown in FIG. 5 is used as an example. In the axial direction A2, a top surface 645 that is of the permanent magnet 64 and that is away from the iron core yoke 631 is higher than a bottom surface 654 that is of the first permanent magnet 65 and that faces the iron core yoke 631. In this way, magnetic leakage is avoided when the top surface 645 that is of the permanent magnet 64 and that is away from the iron core yoke 631 is less than or equal to the bottom surface 654 that is of the first permanent magnet 65 and that faces the iron core yoke 631.

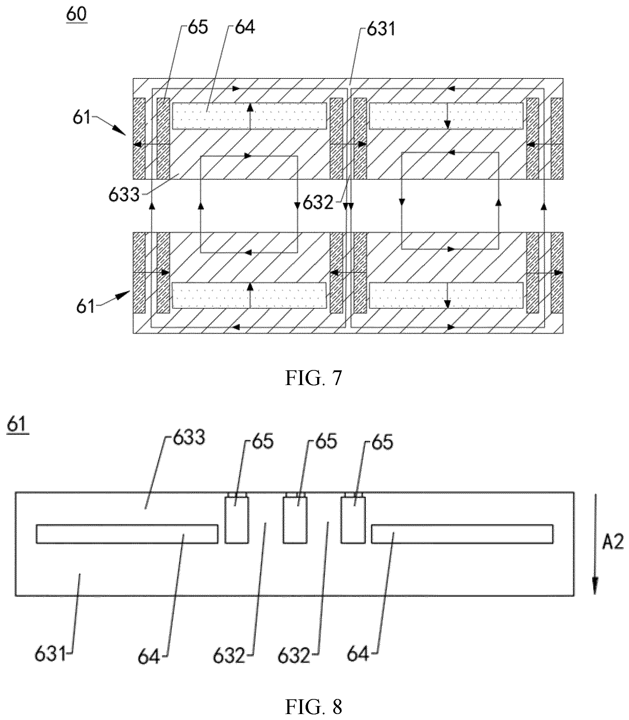

Refer to FIG. 6 and FIG. 7. FIG. 6 is a schematic diagram of a direct-axis magnetic circuit of the motor 60. FIG. 7 is a schematic diagram of a quadrature-axis magnetic circuit of the motor 60. The direct-axis magnetic circuit passes through the permanent magnet 64 and the first permanent magnet 65. The quadrature-axis magnetic circuit does not pass through the permanent magnet 64 and the first permanent magnet 65. The reluctance of the permanent magnet 64 and the first permanent magnet 65 is high, and therefore the direct-axis inductance is low. The reluctance of the spoke plate 632 is low (which may also be understood as that overall reluctance of the iron core 63 is low), so that the quadrature-axis inductance of the quadrature-axis magnetic circuit that passes through the spoke plate 632 is high. In this way, the quadrature-axis inductance is much higher than the direct-axis inductance, that is, the difference between the quadrature-axis inductance and the direct-axis inductance is large, the saliency effect of the motor 60 is significant, and the reluctance torque is increased, which is conducive to improving the torque output capability of the motor 60. The direct-axis magnetic circuit and the quadrature-axis magnetic circuit form a complete magnetic loop through the iron core 63 and the permanent magnet 64 of the motor rotor 61, and a stator core (not shown in the figure), to increase a main flux and reduce magnetic leakage. In this way, flux concentration is implemented to help improve an air gap flux density.

It may be seen from FIG. 6 and FIG. 7 that both magnetic induction lines of the permanent magnet 64 and the first permanent magnet 65 that are in contact with a same iron core pole piece 633 get close to the iron core pole piece 633 or get away from the iron core pole piece 633. In the invention, a combination of the permanent magnet 64 and the first permanent magnet 65 may effectively improve the flux concentration effects of the motor rotor 61, improve an air gap density, increase the torque output capability of the motor, and reduce the eddy current losses of the permanent magnet 64 and the first permanent magnet 65.

With reference to FIG. 4, FIG. 6, and FIG. 7, a size D1 of the spoke plate 632 in the axial direction A2 is greater than a size D2 of the spoke plate 632 in the circumferential direction A1. The direct-axis magnetic circuit partially passes through the spoke plate 632 in the circumferential direction A1. Therefore, the spoke plate 632 can also increase the direct-axis inductance. The size of the spoke plate 632 in the axial direction A2 is limited to be greater than the size of the spoke plate 632 in the circumferential direction A1, so that an increase of the quadrature-axis inductance may be greater than that of the direct-axis inductance. In this way, the difference between the quadrature-axis inductance and the direct-axis inductance can be increased, to increase the reluctance torque and improve the torque output capability of the motor 60.

Refer to FIG. 5. There may be one spoke plate 632 between two adjacent permanent magnets 64. Refer to FIG. 8. There may be two spoke plates 632 between adjacent permanent magnets 64. In another implementation, there may be three, four, or another quantity of spoke plates 632 between adjacent permanent magnets 64. At least two spoke plates 632 are spaced apart in the circumferential direction A1. There may be air (that is, no other structure is placed between adjacent spoke plates) or the first permanent magnet 65 between adjacent spoke plates 632 between two adjacent permanent magnets 64. As a quantity of spoke plates 632 increases, an amount of air or a quantity of first permanent magnets 65 also increases. An increase of the quantity of first permanent magnets 65 may enhance flux concentration effects and increase the torque of the motor. In addition, an increase of the amount of air or the quantity of first permanent magnets 65 can reduce the direct-axis inductance and increase the difference between the quadrature-axis inductance and the direct-axis inductance, to increase the reluctance torque and improve the torque output capability of the motor 60. As the quantity of spoke plates 632 between adjacent permanent magnets 64 increases, at least two spoke plates 632 are disposed at intervals between adjacent permanent magnets 64, so that the quadrature-axis inductance may be effectively increased, the reluctance torque may be increased, and the torque output capability of the motor 60 may be improved.

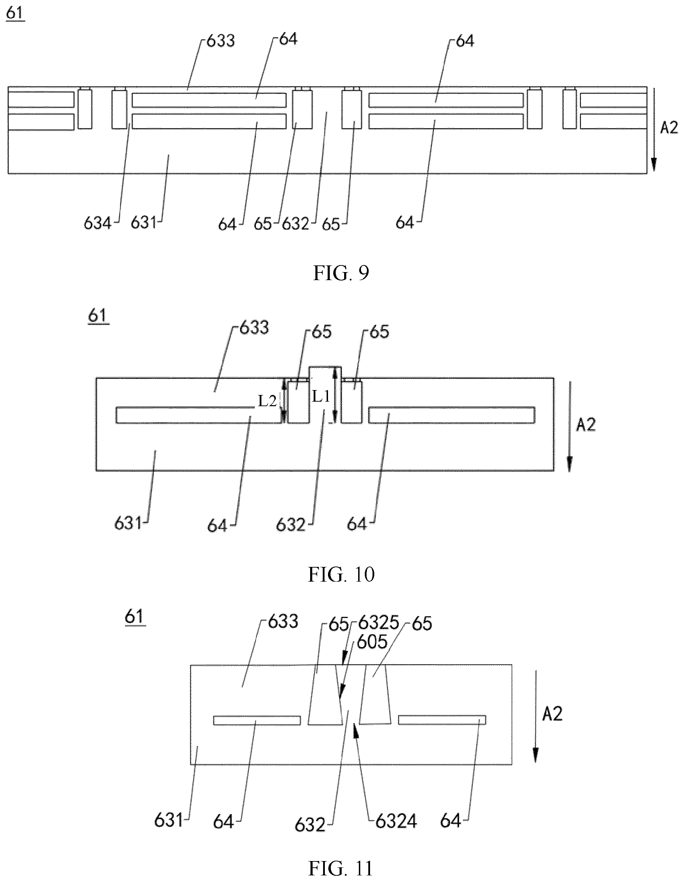

FIG. 9 is a schematic diagram of a structure of the motor rotor 61. In the axial direction A2, the at least two permanent magnets 64 are disposed at intervals in a stacked manner. As the quantity of permanent magnets 64 in the axial direction A2 increases, the direct-axis inductance may be reduced, and the difference between the quadrature-axis inductance and the direct-axis inductance may be increased, so that the reluctance torque is increased, and the torque output capability of the motor 60 is improved.

Refer to FIG. 10. A size L1 of the spoke plate 632 in the axial direction A2 is greater than a distance L2 between a surface that is of the iron core pole piece 633 and that is away from the permanent magnet 64 and the iron core yoke 631. In this implementation, the size L1 of the spoke plate 632 in the axial direction A2 is limited to be greater than the distance L2 between the surface that is of the iron core pole piece 633 and that is away from the permanent magnet 64 and the iron core yoke 631, so that the size of the spoke plate 632 in the axial direction A2 is enlarged. Therefore, the reluctance of the quadrature-axis magnetic circuit may be reduced, the quadrature-axis inductance may be increased, the utilization of the reluctance torque may be increased, and the torque output capability of the motor 60 may be improved. In another implementation, a size L1 of the spoke plate 632 in the axial direction A2 may be less than or equal to a distance L2 between a surface that is of the iron core pole piece 633 and that is away from the permanent magnet 64 and the iron core yoke 631.

The spoke plate 632 can limit the first permanent magnet 65 in the axial direction A2. The spoke plate 632 includes a limiting surface. The limiting surface is in contact with the first permanent magnet 65, so that the spoke plate 632 and the first permanent magnet 65 are fastened in the axial direction A2. A structure of the spoke plate 632 with the limiting surface includes but is not limited to the following three.

First: Refer to FIG. 4 and FIG. 5. The spoke plate 632 includes a main portion 6321, a limiting portion 6322, and a limiting surface 6323. The main portion 6321 is connected to the iron core yoke 631. The limiting portion 6322 is located on a side that is of the main portion 6321 and that is away from the iron core yoke 631. The limiting surface 6323 is located at the limiting portion 6322. The first permanent magnet 65 presses against the limiting surface 6323. In other words, a size of the limiting portion 6322 is greater than that of the main portion 6321. The main portion 6321 and the limiting portion 6322 form a step structure. The limiting surface 6323 is a step surface of the step structure. The first permanent magnet 65 is located between the iron core pole piece 633 and the spoke plate 632. In this implementation, the limiting surface 6323 is disposed on the spoke plate 632, to limit the first permanent magnet 65 in the axial direction A2, so that the first permanent magnet 65 is more stable and cannot move in the axial direction A2. Therefore, overall stability of the motor 60 is improved. Correspondingly, a limiting surface 6333 is disposed on a side that is of the iron core pole piece 633 and that is close to the spoke plate 632. The limiting surface 6333 on the iron core pole piece 633 and the limiting surface 6323 on the spoke plate 632 jointly limit the first permanent magnet 65 in the axial direction A2, so that the first permanent magnet 65 is more stable.

Second: Refer to FIG. 11. The spoke plate 632 includes a first end 6324 and a second end 6325 that are disposed opposite to each other, and a connection surface 605 located between the first end 6324 and the second end 6325. The first end 6324 is connected to the iron core yoke 631. A size of the spoke plate 632 gradually increases from the first end 6324 to the second end 6325. The limiting surface of the spoke plate 632 is the connection surface 605. In other words, the spoke plate 632 of the iron core may be of an inverted trapezoidal structure. The spoke plate 632 may be in contact with the permanent magnet 64. Alternatively, the spoke plate 632 may be spaced apart from the permanent magnet 64. When the spoke plate 632 is spaced apart from the permanent magnet 64, there may be air or another structural part (for example, the first permanent magnet 65) between the spoke plate 632 and the permanent magnet 64. The size of the spoke plate 632 is limited to gradually increase from the first end 6324 to the second end 6325, so that a size of an end that is of a space formed between the permanent magnet 64, the iron core pole piece 633, and the spoke plate 632 of the iron core and that is close to the iron core yoke 631 is large, while a size of an end that is away from the iron core yoke 631 is small. In this way, when the first permanent magnet 65 is disposed between the permanent magnet 64 and the spoke plate 632, the connection surface 605 may limit the first permanent magnet 65 in the axial direction A2, so that the first permanent magnet 65 is more stable and cannot move in the axial direction A2. Therefore, the overall stability of the motor 60 is improved. It may be understood that when the spoke plate 632 of the iron core is of the inverted trapezoidal structure with a wide upper portion and a narrow lower portion, a space between the spoke plate 632 of the iron core and the iron core pole piece 633 may be of a trapezoidal structure with a narrow upper portion and a wide lower portion, that is, the first permanent magnet 65 embedded between the spoke plate 632 of the iron core and the iron core pole piece 633 may be of a trapezoidal structure with a narrow upper portion and a wide lower portion. Therefore, when the first permanent magnet 65 is embedded between the spoke plate 632 and the iron core pole piece 633, mounting difficulty is low, and simplicity in assembling and fastening and positioning precision are ensured.

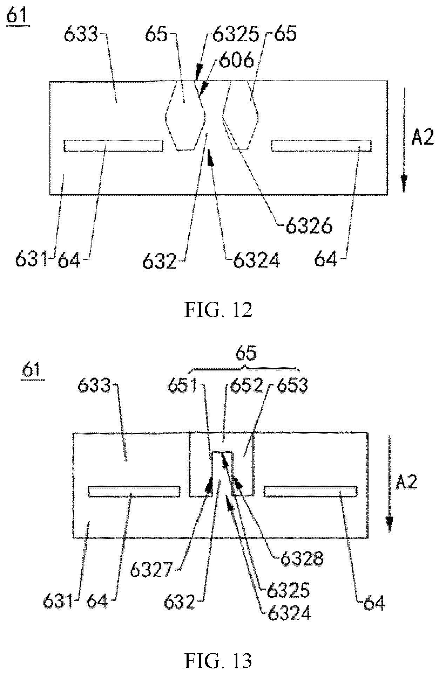

Third: Refer to FIG. 12. The spoke plate 632 includes a first end 6324 and a second end 6325 that are disposed opposite to each other, and a connection portion 6326 located between the first end 6324 and the second end 6325. A connection surface 606 is disposed between the second end 6325 and the connection portion 6326. The first end 6324 is connected to the iron core yoke 631. A size from the first end 6324 to the connection portion 6326 gradually decreases. A size from the second end 6325 to the connection portion 6326 gradually decreases. The limiting surface of the spoke plate 632 is the connection surface 606 between the second end 6325 and the connection portion 6326. In other words, the spoke plate 632 may be of a dumbbell-shaped structure with two large ends and a small middle portion. When the spoke plate 632 is spaced apart from the permanent magnet 64, there may be air or the first permanent magnet 65 between the spoke plate 632 and the permanent magnet 64. The spoke plate 632 is limited as the dumbbell-shaped structure with the two large ends and the small middle portion, so that a size of an end that is of a space formed between the permanent magnet 64 and the spoke plate 632 of the iron core and that is away from the iron core yoke 631 is small. In this way, when the first permanent magnet 65 is disposed between the permanent magnet 64 and the spoke plate 632, the connection surface 606 between the second end 6325 and the connection portion 6326 may limit the first permanent magnet 65 in the axial direction A2, so that the first permanent magnet 65 is more stable and cannot move in the axial direction A2. Therefore, the overall stability of the motor 60 is improved. It may be understood that when the spoke plate 632 of the iron core is of the dumbbell-shaped structure with the two large ends and the small middle portion, a space between the spoke plate 632 of the iron core and the iron core pole piece 633 may be of a structure with two small ends and a large middle portion, that is, the first permanent magnet 65 embedded between the spoke plate 632 of the iron core and the iron core pole piece 633 may be of a structure with two small ends and a large middle portion.

A structural relationship between the first permanent magnet 65 and the spoke plate 632 is described below.

In a first implementation, which is included in embodiments of the invention as defined in the appended set of claims, as shown in FIG. 13, the first permanent magnet 65 includes a first magnetic portion 651, a second magnetic portion 652, and a third magnetic portion 653 that are sequentially connected. The first magnetic portion 651, the second magnetic portion 652, and the third magnetic portion 653 jointly form a first permanent magnet 65 of a U-shaped structure. The spoke plate 632 includes a first end 6324 and a second end 6325 that are disposed opposite to each other, and a first side portion 6327 and a second side portion 6328 that are located between the first end 6324 and the second end 6325 and that are disposed opposite to each other. The first end 6324 is connected to the iron core yoke 631. The second magnetic portion 652 is located on an upper side of the second end 6325. The first magnetic portion 651 is located on a side on which the first side portion 6327 is located. The third magnetic portion 653 is located on a side on which the second side portion 6328 is located. In this implementation, the first permanent magnet 65 of the U-shaped structure is fastened to the spoke plate 632 upside down. In this way, the first magnetic portion 651 and the third magnetic portion 653 on two sides of the spoke plate 632 are connected as a whole, and simplicity in mounting and positioning accuracy are ensured.

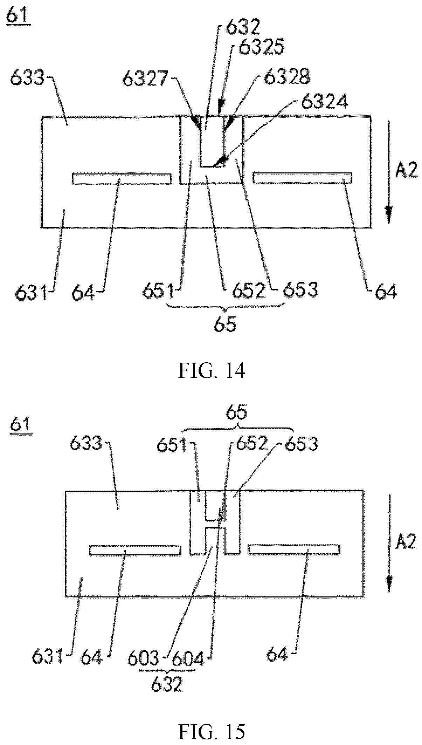

In a second implementation, which is not an embodiment of the invention as defined in the appended set of claims, as shown in FIG. 14, the first permanent magnet 65 includes a first magnetic portion 651, a second magnetic portion 652, and a third magnetic portion 653 that are sequentially connected. The spoke plate 632 includes a first end 6324 and a second end 6325 that are disposed opposite to each other, and a first side portion 6327 and a second side portion 6328 that are located between the first end 6324 and the second end 6325 and that are disposed opposite to each other. The iron core yoke 631, the first end 6324, and the second end 6325 are sequentially arranged in the axial direction A2. The second magnetic portion 652 is located between the first end 6324 and the iron core yoke 631. The first magnetic portion 651 is located on a side on which the first side portion 6327 is located. The third magnetic portion 653 is located on a side on which the second side portion 6328 is located. In this implementation, the first permanent magnet 65 is of a U-shaped structure, and the spoke plate 632 is located in the first permanent magnet 65 of the U-shaped structure. The spoke plate 632 can limit the first permanent magnet 65 in the axial direction A2, to prevent structural instability of the motor rotor 61 caused by a movement of the first permanent magnet 65 in the axial direction A2.

In a third implementation, which is not an embodiment of the invention as defined in the appended set of claims, as shown in FIG. 15, the first permanent magnet 65 includes a first magnetic portion 651, a second magnetic portion 652, and a third magnetic portion 653 that are sequentially connected. The first magnetic portion 651, the second magnetic portion 652, and the third magnetic portion 653 jointly form a first permanent magnet 65 of an H-shaped structure. The spoke plate 632 includes a first plate 603 and a second plate 604. The first plate 603 and the second plate 604 are disposed at an interval in the axial direction A2. The first plate 603 is connected to the iron core yoke 631. The second magnetic portion 652 is located between the first plate 603 and the second plate 604. The first magnetic portion 651 and the third magnetic portion 653 are located on two opposite sides of the spoke plate 632. In this implementation, the first permanent magnet 65 is of the H-shaped structure, and the second magnetic portion 652 of the first permanent magnet 65 of the H-shaped structure is located between the first plate 603 and the second plate 604. The second plate 604 can limit the first permanent magnet 65 in the axial direction A2, to prevent structural instability of the motor rotor 61 caused by a movement of the first permanent magnet 65 in the axial direction A2.

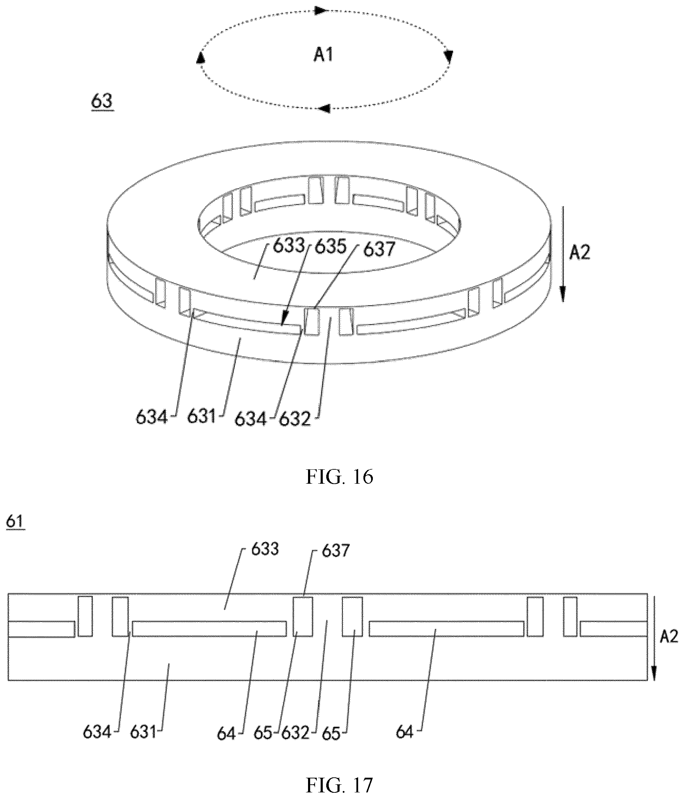

As shown in FIG. 16 and FIG. 17, FIG. 16 is a schematic diagram of another structure of the iron core 63 of the motor rotor 61, and FIG. 17 is a schematic diagram of a planar structure of the motor rotor 61. In this implementation, the iron core 63 is provided with joint portions 637. The joint portion 637 is connected to the iron core pole piece 633 and the spoke plate 632. The first permanent magnet 65 is located between the joint portion 637 and the iron core yoke 631. That is, the joint portion 637 blocks an opening between the iron core pole piece 633 and the spoke plate 632. The iron core pole piece 633 and the spoke plate 632 are on left and right sides of the first permanent magnet 65 respectively. The joint portion 637 is on an upper side of the first permanent magnet 65, while the iron core yoke 631 is on a lower side. The iron core pole piece 633 and the spoke plate 632 limit the first permanent magnet 65 in the circumferential direction A1, so that the first permanent magnet 65 cannot move in the circumferential direction A1. The joint portion 637 limits the first permanent magnet 65 in the axial direction A2, so that the first permanent magnet 65 is more stable and cannot move in the axial direction A2. Therefore, the overall stability of the motor 60 is improved.

In this implementation, the joint portion 637 is connected to the iron core pole piece 633 and the spoke plate 632, so that the iron core yoke 631, the spoke plate 632, the iron core pole piece 633, and the joint portion 637 may be of an integrated structure. Therefore, structural strength and stability of the iron core 63 are high. It may be understood that in this implementation, the integrated structure of the iron core 63 may also be implemented without disposing the flux barrier 634, and the accommodating cavity 635 can be reserved for the permanent magnet 64, to help reduce a weight of the motor 60 and reduce costs. In the invention, the iron core 63 may be manufactured in a manner of winding stamping, casting machining, or integrated die casting.

It may be understood that in the invention, the accommodating cavity 635 and an accommodating space between the spoke plate 632 of the iron core and the iron core pole piece 633 are reserved on the iron core 63. In this way, during assembly, the permanent magnet 64, the first permanent magnet 65, and the iron core 63 may be assembled only by embedding the permanent magnet 64 in the accommodating cavity 635 and embedding the first permanent magnet 65 in the accommodating space between the spoke plate 632 of the iron core and the iron core pole piece 633, so that mounting difficulty is low, and mounting efficiency is high.

According to the invention, the quadrature-axis magnetic circuit is reserved between adjacent permanent magnets 64, and the spoke plate 632 whose reluctance is less than that of air or the permanent magnet material is disposed on the quadrature-axis magnetic circuit, that is, the spoke plate 632 is disposed between the adjacent permanent magnets 64. In this way, the reluctance of the quadrature-axis magnetic circuit may be reduced, and the quadrature-axis inductance may be increased. Therefore, the reluctance torque is increased, and the torque output capability of the motor 60 is improved. The torque of the motor includes the reluctance torque and the permanent magnet torque. It may be understood that when the required torque of the motor is constant, increasing the reluctance torque may correspondingly reduce the permanent magnet torque. In this way, the quantity of permanent magnets 64 may be reduced, which is conducive to reduction of the costs. In the invention, the combination of the permanent magnet 64 and the first permanent magnet 65 that are magnetized in different directions is used. The permanent magnet 64 is magnetized in the axial direction A2, and two adjacent permanent magnets 64 are magnetized in opposite directions. The first permanent magnet 65 is magnetized in the circumferential direction A1, and at least two first permanent magnets 65 between two adjacent permanent magnets 64 are magnetized in a same direction. A combination of different magnetization directions may effectively improve the flux concentration effects of the motor rotor 61, improve the air gap density, and reduce the eddy current losses of the permanent magnet 64 and the first permanent magnet 65. According to the invention, the permanent magnet 64 may be disposed between the iron core yoke 631 and the iron core pole piece 633 to form the motor rotor 61 of the built-in structure. The motor rotor 61 of the built-in structure achieves significant saliency effect of the motor, and has an advantage of generating a high reluctance torque. In addition, disposing the permanent magnet 64 inside may fully utilize the reluctance torque generated by asymmetry of the magnetic circuit of the motor rotor 61, to improve the torque output capability of the motor 60 without increasing the quantity of permanent magnets 64.

## Claims

1. A motor rotor suitable for an axial flux motor (61), comprising an iron core yoke (631), a spoke plate (632), and at least two permanent magnets (64), wherein the iron core yoke is in a disk shape, the iron core yoke comprises an axial direction and a circumferential direction, the at least two permanent magnets are fastened to the iron core yoke and sequentially spaced apart in the circumferential direction, the spoke plate is located between adjacent permanent magnets, and reluctance of the spoke plate is less than that of air, or reluctance of the spoke plate is less than that of the permanent magnet with the least reluctance among the at least two permanent magnets,
wherein the motor rotor further comprises a first permanent magnet (65), the first permanent magnet comprises a first magnetic portion (651), a second magnetic portion (652), and a third magnetic portion (653) that are sequentially connected, the spoke plate comprises a first end (6324) and a second end (6325) that are disposed opposite to each other, and a first side portion (6327) and a second side portion (6328) that are located between the first end and the second end, the first end is connected to the iron core yoke, the second magnetic portion is located at the second end, the first magnetic portion is located at the first side portion, and the third magnetic portion is located at the second side portion.

2. The motor rotor (61) according to claim 1, wherein a size of the spoke plate (632) in the axial direction is greater than a size of the spoke plate (632) in the circumferential direction.

3. The motor rotor (61) according to claim 1, wherein there are at least two spoke plates (632) between two adjacent permanent magnets (64), and the at least two spoke plates (632) are spaced apart in the circumferential direction.

4. The motor rotor (61) according to claim 1, wherein the first permanent magnet (65) is located between the permanent magnet (64) and the spoke plate (632), and the reluctance of the spoke plate (632) is less than that of the first permanent magnet (65).

5. The motor rotor (61) according to claim 4, wherein the spoke plate (632) comprises a limiting surface (6323), and the limiting surface (6323) is in contact with the first permanent magnet (65), so that the spoke plate (632) and the first permanent magnet (65) are fastened in the axial direction.

6. The motor rotor (61) according to claim 5, wherein the spoke plate (632) comprises a main portion (6321) and a limiting portion (6322), the main portion (6321) is connected to the iron core yoke (631), the limiting portion (6322) is on a side that is of the main portion (6321) and that is away from the iron core yoke (631), and the limiting surface (6323) is located at the limiting portion (6322).

7. The motor rotor (61) according to claim 5, wherein a size of the spoke plate (632) gradually increases from the first end (6324) to the second end (6325), and the limiting surface (6323) is a connection surface of the first end (6324) and the second end (6325).

8. The motor rotor (61) according to claim 5, wherein the spoke plate (632) comprises a connection portion (6326) located between the first end (6324) and the second end (6325), a size from the first end (6324) to the connection portion (6326) gradually decreases, a size from the second end (6325) to the connection portion (6326) gradually decreases, and the limiting surface (6323) is a connection surface of the second end (6325) and the connection portion (6326).

9. The motor rotor (61) according to claim 4, wherein the motor rotor (61) further comprises an iron core pole piece (633), the iron core pole piece (633) is located on a side that is of the permanent magnet (64) and that is away from the iron core yoke (631).

10. The motor rotor (61) according to claim 1, wherein the motor rotor (61) further comprises an iron core pole piece (633) and a flux barrier (634), the iron core pole piece (633) and the iron core yoke (631) are disposed at an interval, the flux barrier (634) is connected to the iron core pole piece (633) and the iron core yoke (631), the iron core pole piece (633), the flux barrier (634), and the iron core yoke (631) enclose an accommodating cavity (635), and the permanent magnet (64) is located in the accommodating cavity (635).

11. The motor rotor (61) according to claim 9 or claim 10, wherein a size of the spoke plate (632) in the axial direction is greater than a distance between a surface that is of the iron core pole piece (633) and that is away from the permanent magnet (64) and the iron core yoke (631).

12. A motor (60), comprising a stator (601), a rotating shaft (602), and the motor rotor (61) according to any one of claims 1 to 11, wherein the motor rotor (61) is mounted to the rotating shaft, and the stator is mounted to the rotating shaft.

13. An electric vehicle (10), comprising a transmission shaft (40), wheels (50), and the motor (60) according to claim 12, wherein the transmission shaft is connected to the motor and the wheels.

## Patentansprüche

1. Rotor für einen Motor, der für einen Axialflussmotor (61) geeignet ist, umfassend ein Eisenkernjoch (631), eine Speichenplatte (632) und mindestens zwei Permanentmagnete (64), wobei das Eisenkernjoch scheibenförmig ist, das Eisenkernjoch eine axiale Richtung und eine Umfangsrichtung aufweist, die mindestens zwei Permanentmagnete an dem Eisenkernjoch befestigt und in der Umfangsrichtung sequenziell beabstandet sind, sich die Speichenplatte zwischen benachbarten Permanentmagneten befindet, und der magnetische Widerstand der Speichenplatte geringer als jener von Luft ist oder der magnetische Widerstand der Speichenplatte geringer als jener des Permanentmagneten mit dem geringsten magnetischen Widerstand unter den mindestens zwei Permanentmagneten ist,
wobei der Rotor für einen Motor ferner einen ersten Permanentmagneten (65) umfasst, der erste Permanentmagnet einen ersten magnetischen Abschnitt (651), einen zweiten magnetischen Abschnitt (652) und einen dritten magnetischen Abschnitt (653) umfasst, die sequenziell verbunden sind, die Speichenplatte ein erstes Ende (6324) und ein zweites Ende (6325), die einander gegenüberliegend angeordnet sind, und einen ersten Seitenabschnitt (6327) und einen zweiten Seitenabschnitt (6328) umfasst, die sich zwischen dem ersten Ende und dem zweiten Ende befinden, das erste Ende mit dem Eisenkernjoch verbunden ist, sich der zweite magnetische Abschnitt an dem zweiten Ende befindet, sich der erste magnetische Abschnitt an dem ersten Seitenabschnitt befindet und sich der dritte magnetische Abschnitt an dem zweiten Seitenabschnitt befindet.

2. Rotor (61) für einen Motor nach Anspruch 1, wobei eine Größe der Speichenplatte (632) in der axialen Richtung größer als eine Größe der Speichenplatte (632) in der Umfangsrichtung ist.

3. Rotor (61) für einen Motor nach Anspruch 1, wobei mindestens zwei Speichenplatten (632) zwischen zwei benachbarten Permanentmagneten (64) liegen und die mindestens zwei Speichenplatten (632) in der Umfangsrichtung voneinander beabstandet sind.

4. Rotor (61) für einen Motor nach Anspruch 1, wobei sich der erste Permanentmagnet (65) zwischen dem Permanentmagneten (64) und der Speichenplatte (632) befindet und der magnetische Widerstand der Speichenplatte (632) geringer als jener des ersten Permanentmagneten (65) ist.

5. Rotor (61) für einen Motor nach Anspruch 4, wobei die Speichenplatte (632) eine Begrenzungsfläche (6323) umfasst, und die Begrenzungsfläche (6323) mit dem ersten Permanentmagneten (65) in Kontakt steht, sodass die Speichenplatte (632) und der erste Permanentmagnet (65) in der axialen Richtung befestigt sind.

6. Rotor (61) für einen Motor nach Anspruch 5, wobei die Speichenplatte (632) einen Hauptabschnitt (6321) und einen Begrenzungsabschnitt (6322) umfasst, der Hauptabschnitt (6321) mit dem Eisenkernjoch (631) verbunden ist, der Begrenzungsabschnitt (6322) auf einer Seite liegt, die von dem Hauptabschnitt (6321) stammt und die von dem Eisenkernjoch (631) entfernt ist, und sich die Begrenzungsfläche (6323) an dem Begrenzungsabschnitt (6322) befindet.

7. Rotor (61) für einen Motor nach Anspruch 5, wobei eine Größe der Speichenplatte (632) von dem ersten Ende (6324) zu dem zweiten Ende (6325) graduell zunimmt und die Begrenzungsfläche (6323) eine Verbindungsfläche des ersten Endes (6324) und des zweiten Endes (6325) ist.

8. Rotor (61) für einen Motor nach Anspruch 5, wobei die Speichenplatte (632) einen Verbindungsabschnitt (6326) umfasst, der sich zwischen dem ersten Ende (6324) und dem zweiten Ende (6325) befindet, eine Größe von dem ersten Ende (6324) zu dem Verbindungsabschnitt (6326) graduell abnimmt, eine Größe von dem zweiten Ende (6325) zu dem Verbindungsabschnitt (6326) graduell abnimmt und die Begrenzungsfläche (6323) eine Verbindungsfläche des zweiten Endes (6325) und des Verbindungsabschnitts (6326) ist.

9. Rotor (61) für einen Motor nach Anspruch 4, wobei der Rotor (61) für einen Motor ferner ein Eisenkernpolstück (633) umfasst, sich das Eisenkernpolstück (633) auf einer Seite befindet, die von dem Permanentmagneten (64) stammt und von dem Eisenkernjoch (631) entfernt ist.

10. Rotor (61) für einen Motor nach Anspruch 1, wobei der Rotor (61) für einen Motor ferner ein Eisenkernpolstück (633) und eine Flussbarriere (634) umfasst, das Eisenkernpolstück (633) und das Eisenkernjoch (631) in einem Abstand angeordnet sind, die Flussbarriere (634) mit dem Eisenkernpolstück (633) und dem Eisenkernjoch (631) verbunden ist, das Eisenkernpolstück (633), die Flussbarriere (634) und das Eisenkernjoch (631) einen Aufnahmehohlraum (635) umschließen, und sich der Permanentmagnet (64) in dem Aufnahmehohlraum (635) befindet.

11. Rotor (61) für einen Motor nach Anspruch 9 oder Anspruch 10, wobei eine Größe der Speichenplatte (632) in der axialen Richtung größer als ein Abstand zwischen einer Fläche ist, die von dem Eisenkernpolstück (633) stammt und die von dem Permanentmagneten (64) und dem Eisenkernjoch (631) entfernt ist.

12. Motor (60), umfassend einen Stator (601), eine Drehwelle (602) und den Rotor (61) für einen Motor nach einem der Ansprüche 1 bis 11, wobei der Rotor (61) für einen Motor an der Drehwelle montiert ist und der Stator an der Drehwelle montiert ist.

13. Elektrofahrzeug (10), umfassend eine Getriebewelle (40), Räder (50) und den Motor (60) nach Anspruch 12, wobei die Getriebewelle mit dem Motor und den Rädern verbunden ist.

## Revendications

1. Rotor de moteur adapté à un moteur à flux axial (61), comprenant une culasse de noyau de fer (631), une plaque à rayons (632), et au moins deux aimants permanents (64), dans lequel la culasse de noyau de fer est de forme discoïdale, la culasse de noyau de fer comprend une direction axiale et une direction circonférentielle, les au moins deux aimants permanents sont fixés à la culasse de noyau de fer et espacés séquentiellement dans la direction circonférentielle, la plaque à rayons est située entre des aimants permanents adjacents, et la réluctance de la plaque à rayons est inférieure à celle de l'air, ou la réluctance de la plaque à rayons est inférieure à celle de l'aimant permanent ayant la plus faible réluctance parmi les au moins deux aimants permanents,
dans lequel le rotor de moteur comprend en outre un premier aimant permanent (65), le premier aimant permanent comprend une première partie magnétique (651), une deuxième partie magnétique (652), et une troisième partie magnétique (653) qui sont connectées séquentiellement, la plaque à rayons comprend une première extrémité (6324) et une seconde extrémité (6325) qui sont disposées face à face, et une première partie latérale (6327) et une seconde partie latérale (6328) qui sont situées entre la première extrémité et la seconde extrémité, la première extrémité est reliée à la culasse de noyau de fer, la deuxième partie magnétique est située au niveau de la seconde extrémité, la première partie magnétique est située au niveau de la première partie latérale, et la troisième partie magnétique est située au niveau de la seconde partie latérale.

2. Rotor de moteur (61) selon la revendication 1, dans lequel une taille de la plaque à rayons (632) dans la direction axiale est supérieure à une taille de la plaque à rayons (632) dans la direction circonférentielle.

3. Rotor de moteur (61) selon la revendication 1, dans lequel il y a au moins deux plaques à rayons (632) entre deux aimants permanents adjacents (64), et les au moins deux plaques à rayons (632) sont espacées dans la direction circonférentielle.

4. Rotor de moteur (61) selon la revendication 1, dans lequel le premier aimant permanent (65) est situé entre l'aimant permanent (64) et la plaque à rayons (632), et la réluctance de la plaque à rayons (632) est inférieure à celle du premier aimant permanent (65).

5. Rotor de moteur (61) selon la revendication 4, dans lequel la plaque à rayons (632) comprend une surface de limitation (6323), et la surface de limitation (6323) est en contact avec le premier aimant permanent (65), de sorte que la plaque à rayons (632) et le premier aimant permanent (65) sont fixés dans la direction axiale.

6. Rotor de moteur (61) selon la revendication 5, dans lequel la plaque à rayons (632) comprend une partie principale (6321) et une partie de limitation (6322), la partie principale (6321) est reliée au noyau de fer (631), la partie de limitation (6322) est située sur un côté qui est celui de la partie principale (6321) et qui est éloigné de la culasse de noyau de fer (631), et la surface de limitation (6323) est située au niveau de la partie de limitation (6322).

7. Rotor de moteur (61) selon la revendication 5, dans lequel une taille de la plaque à rayons (632) augmente progressivement de la première extrémité (6324) à la seconde extrémité (6325), et la surface de limitation (6323) est une surface de connexion de la première extrémité (6324) et de la seconde extrémité (6325).

8. Rotor de moteur (61) selon la revendication 5, dans lequel la plaque à rayons (632) comprend une partie de connexion (6326) située entre la première extrémité (6324) et la seconde extrémité (6325), une taille de la première extrémité (6324) à la partie de connexion (6326) diminue progressivement, une taille de la seconde extrémité (6325) à la partie de connexion (6326) diminue progressivement, et la surface de limitation (6323) est une surface de connexion de la seconde extrémité (6325) et de la partie de connexion (6326).

9. Rotor de moteur (61) selon la revendication 4, dans lequel le rotor de moteur (61) comprend en outre une pièce polaire de noyau de fer (633), la pièce polaire de noyau de fer (633) est située d'un côté qui est celui de l'aimant permanent (64) et qui est éloigné de la culasse de noyau de fer (631).

10. Rotor de moteur (61) selon la revendication 1, dans lequel le rotor de moteur (61) comprend en outre une pièce polaire de noyau de fer (633) et une barrière de flux (634), la pièce polaire de noyau de fer (633) et la culasse de noyau de fer (631) sont disposés à intervalle, la barrière de flux (634) est connectée à la pièce polaire de noyau de fer (633) et à la culasse de noyau de fer (631), la pièce polaire de noyau de fer (633), la barrière de flux (634), et la culasse de noyau de fer (631) entourent une cavité d'accueil (635), et l'aimant permanent (64) est situé dans la cavité d'accueil (635).

11. Rotor de moteur (61) selon la revendication 9 ou la revendication 10, dans lequel une taille de la plaque à rayons (632) dans la direction axiale est supérieure à une distance entre une surface qui est celle de la pièce polaire de noyau de fer (633) et qui est éloignée de l'aimant permanent (64) et de la culasse de noyau de fer (631).

12. Moteur (60), comprenant un stator (601), un arbre rotatif (602), et le rotor de moteur (61) selon l'une quelconque des revendications 1 à 11, dans lequel le rotor de moteur (61) est monté sur l'arbre rotatif, et le stator est monté sur l'arbre rotatif.

13. Véhicule électrique (10), comprenant un arbre de transmission (40), des roues (50) et le moteur (60) selon la revendication 12, dans lequel l'arbre de transmission est relié au moteur et aux roues.
